# FASCICULE DE BREVET EUROPEEN

(11) **EP 4 182 551 B1**
(45) Date de publication et mention de la délivrance du brevet: **28.08.2024**
(21) Numéro de dépôt: 21746529.3
(22) Date de dépôt: 08.07.2021
(51) Int. Cl.: F02K 1/72, F02K 3/06, B64D 29/08

(54) **INVERSEUR DE POUSSÉE COMPRENANT DES DEMI-ENSEMBLES PIVOTANTS ET UNE POUTRE DE LIAISON SIX-HEURES DES DEMI-ENSEMBLES**
SCHUBUMKEHRVORRICHTUNG MIT SCHWENKBAREN HALBEINHEITEN UND EINEM VERBINDUNGSTRÄGER FÜR DIE HALBEINHEITEN IN DER SECHS-UHR-POSITION
THRUST REVERSER COMPRISING PIVOTING HALF-ASSEMBLIES AND A CONNECTING BEAM FOR THE HALF-ASSEMBLIES AT THE SIX O'CLOCK POSITION

(30) Priorité: 20.07.2020 FR 2007579
(43) Date de publication de la demande: 24.05.2023
(73) Titulaire: Safran Nacelles, 76700 Gonfreville-l'Orcher (FR)
(72) Inventeur: BOILEAU, Patrick, André, 77550 MOISSY-CRAMAYEL (FR); CHANDELIER, Julien, 77550 MOISSY-CRAMAYEL (FR); VALLEROY, Laurent Georges, 77550 MOISSY-CRAMAYEL (FR)
(74) Mandataire: Brevalex
(86) Numéro de dépôt international: PCT/FR2021/051263
(87) Numéro de publication internationale: WO 2022/018345

(56) Documents cités:
- EP-A2- 2 631 181
- WO-A1-2013/038093
- US-A- 4 541 673
- US-A1- 2019 055 902

## Description

### Domaine technique

L'invention se rapporte au domaine des inverseurs de poussée pour ensemble propulsif d'aéronef et plus précisément des inverseurs présentant une structure « en D » tels que celui décrit dans le document FR 3 074 853 A1.

L'invention présente un intérêt particulier lorsque l'inverseur comprend des grilles mobiles.

### État de la technique antérieure

De manière connue en soi, un inverseur de poussée à structure en D comprend deux demi-ensembles articulés sur des poutres qui s'étendent de part et d'autre d'un mât de l'ensemble propulsif, de manière à pouvoir ouvrir ou fermer ces demi-ensembles, c'est-à-dire les faire passer d'une configuration de vol à une configuration de maintenance ou réciproquement.

Le document FR 3 074 853 A1 divulgue un inverseur de ce type qui comprend en outre un caisson d'assemblage portant un dispositif de verrouillage des demi-ensembles en configuration de vol.

Lors de l'ouverture/fermeture des demi-ensembles, chacun des demi-ensembles est placé en appui sur une surface respective du caisson d'assemblage puis verrouillé dans cette position, indépendamment de l'autre demi-ensemble, à l'aide dudit dispositif de verrouillage. Les demi-ensembles sont ensuite reliés l'un avec l'autre à l'aide de verrous.

Chacun des demi-ensembles est donc verrouillé d'une part avec le caisson d'assemblage et d'autre part avec l'autre demi-ensemble, produisant un assemblage hyperstatique.

De plus, le dispositif de verrouillage décrit dans le document précité complique la procédure de verrouillage des demi-ensembles et est peu robuste. Le document EP 2 631 181 montre un inverseur de poussée selon le préambule de la revendication 1.

### Exposé de l'invention

Un but de l'invention est de procurer un inverseur de poussée à grilles permettant de simplifier et d'améliorer le positionnement et le verrouillage des demi-ensembles en configuration de vol.

Un autre but de l'invention est de procurer un inverseur de poussée ayant une architecture qui autorise un déplacement des grilles lorsque l'inverseur passe d'une configuration de poussée directe à une configuration d'inversion de poussée.

A cet effet, l'invention a pour objet un inverseur de poussée pour ensemble propulsif d'aéronef, comprenant deux demi-ensembles, une poutre de liaison et des grilles, chacun des demi-ensembles comprenant un capot mobile et une structure fixe comportant un premier élément de liaison et un deuxième élément de liaison, la poutre de liaison comprenant un organe de liaison. Pour chacun des demi-ensembles :
- le premier élément de liaison est configuré pour articuler le demi-ensemble sur une partie fixe de l'ensemble propulsif de manière à pouvoir déplacer le demi-ensemble entre une configuration de vol dans laquelle le deuxième élément de liaison coopère avec l'organe de liaison et une configuration de maintenance dans laquelle le deuxième élément de liaison est désolidarisé de l'organe de liaison,
- en configuration de vol, le capot mobile est mobile par rapport à la structure fixe en translation le long d'un axe central longitudinal entre une position de poussée directe, dans laquelle la structure fixe et le capot mobile délimitent radialement entre eux une partie respective d'un conduit afin de canaliser un écoulement de fluide vers l'arrière de l'ensemble propulsif pour générer une poussée, et une position d'inversion de poussée, dans laquelle le capot mobile découvre un espace recevant les grilles de sorte qu'une partie du fluide s'écoulant dans le conduit puisse traverser les grilles en étant déviée par celles-ci de manière à générer une contre-poussée.

Selon l'invention, parmi l'organe de liaison et le deuxième élément de liaison de chacun des demi-ensembles, l'un comprend une rainure et l'autre comprend un tenon configuré pour pénétrer dans la rainure lorsque les demi-ensembles sont déplacés de la configuration de maintenance jusqu'à la configuration de vol de manière à positionner chacun des demi-ensembles en configuration de vol, l'inverseur de poussée comprenant un ou plusieurs verrous configurés pour relier l'un à l'autre et pour verrouiller les demi-ensembles en configuration de vol.

Une telle rainure et un tel tenon permettent de réaliser un encastrement à la fois précis et robuste tout en assurant une liaison compacte qui réduit l'encombrement de l'assemblage en configuration de vol.

De plus, un tel encastrement ne nécessite pas de verrouiller indépendamment chacun des demi-ensembles sur la poutre de liaison, ce qui simplifie la procédure de verrouillage et permet d'utiliser uniquement des verrous conventionnels.

L'architecture de cet inverseur est compatible avec l'utilisation de grilles mobiles, qui peuvent par exemple être reliées à la poutre de liaison selon une liaison glissière.

La poutre de liaison permet de transmettre des efforts des demi-ensembles vers une partie fixe de l'ensemble propulsif sur laquelle la poutre de liaison peut être fixée.

Par ailleurs, une telle architecture permet de ménager des passages pour des servitudes.

Dans un mode de réalisation, le deuxième élément de liaison de chacun des demi-ensembles forme une demi-cavité enveloppant une demi-partie respective de l'organe de liaison lorsque les demi-ensembles sont en configuration de vol.

Dans un mode de réalisation, la poutre de liaison s'étend le long d'un axe autour duquel s'étend la rainure.

Selon une première variante, la rainure est formée par l'organe de liaison et chacun des deuxièmes éléments de liaison des demi-ensembles comprend un tenon respectif configuré pour être reçu dans une partie respective de la rainure lorsque les demi-ensembles sont en configuration de vol.

Selon une deuxième variante, l'organe de liaison forme ledit tenon et chacun des deuxièmes éléments de liaison des demi-ensembles comprend une rainure respective configurée pour recevoir une partie respective du tenon lorsque les demi-ensembles sont en configuration de vol.

Ces variantes peuvent être combinées. Par exemple, l'organe de liaison peut comprendre une première rainure et un premier tenon et chacun des deuxièmes éléments de liaison des demi-ensembles peut comprendre d'une part un deuxième tenon configuré pour être reçu dans une partie respective de la première rainure lorsque les demi-ensembles sont en configuration de vol et, d'autre part, une deuxième rainure configurée pour recevoir une partie respective du premier tenon lorsque les demi-ensembles sont en configuration de vol.

Dans un mode de réalisation, l'un desdits verrous est un verrou interne et un autre desdits verrous est un verrou externe.

De préférence, le verrou interne peut être relié à la structure fixe de l'un des demi-ensembles et être configuré pour coopérer avec un premier élément d'accroche solidaire de la structure fixe de l'autre demi-ensemble, l'élément d'accroche s'étendant radialement entre l'axe central longitudinal et un axe le long duquel s'étend de la poutre de liaison.

De préférence, le verrou externe peut être relié à la structure fixe de l'un des demi-ensembles et être configuré pour coopérer avec un deuxième élément d'accroche solidaire de la structure fixe de l'autre demi-ensemble, l'axe le long duquel s'étend la poutre de liaison s'étendant radialement entre le deuxième élément d'accroche et l'axe central longitudinal.

Dans un mode de réalisation, la poutre de liaison comprend des premiers rails et la structure fixe de chacun des demi-ensembles comprend un deuxième rail, les grilles étant mobiles entre une première position et une deuxième position et étant configurées pour coopérer avec les premiers rails au moins sur une première partie d'un déplacement entre la première à la deuxième position et pour coopérer avec les deuxièmes rails au moins sur une deuxième partie de ce déplacement.

De préférence, le premier élément de liaison de chacun des demi-ensembles est situé d'un côté d'un plan longitudinal médian passant par l'axe central longitudinal et dans lequel la poutre de liaison est située de l'autre côté de ce plan longitudinal médian.

L'invention a aussi pour objet une nacelle pour ensemble propulsif d'aéronef, comprenant un inverseur de poussée tel que défini ci-dessus.

L'invention a aussi pour objet un ensemble propulsif pour aéronef, comprenant une telle nacelle.

Dans un mode de réalisation, l'ensemble propulsif comprend un carter de soufflante, la poutre de liaison s'étendant axialement en porte-à-faux par rapport au carter de soufflante.

L'invention a enfin pour objet un aéronef comprenant un tel ensemble propulsif.

Selon un autre aspect, l'invention a pour objet un procédé de placement des demi-ensembles de l'inverseur de poussée décrit ci-dessus en configuration de vol.

Ce procédé comprend une étape d'insertion dudit tenon dans ladite rainure.

De préférence, le procédé comprend, après l'étape d'insertion, une étape de verrouillage dans laquelle les demi-ensembles sont reliés l'un à l'autre par lesdits verrous.

D'autres avantages et caractéristiques de l'invention apparaîtront à la lecture de la description détaillée, non limitative, qui suit.

### Brève description des dessins

La description détaillée qui suit fait référence aux dessins annexés sur lesquels :
[Fig. 1] est une vue schématique en coupe longitudinale d'un ensemble propulsif d'aéronef comprenant un turboréacteur à double flux ;
[Fig. 2] est une vue schématique en perspective de l'ensemble propulsif de la figure 1 ;
[Fig. 3] est une vue schématique en perspective d'un demi-ensemble d'un inverseur de poussée à structure en D ;
[Fig. 4] est une vue schématique en perspective de l'ensemble propulsif de la figure 1 ;
[Fig. 5] est une vue schématique en perspective de l'ensemble propulsif de la figure 1, en configuration de maintenance ;
[Fig. 6] est une vue schématique en perspective de l'ensemble propulsif de la figure 1, en configuration d'inversion de poussée ;
[Fig. 7] est une vue schématique en perspective d'une partie de l'ensemble propulsif de la figure 1, montrant un carénage de section médiane, des grilles et une poutre de liaison ;
[Fig. 8] est une vue schématique en perspective éclatée de la poutre de liaison de la figure 7 et de deux poutres inférieures appartenant respectivement à deux demi-ensembles d'inverseur de poussée ;
[Fig. 9] est une vue schématique des poutres de la figure 8, dans une configuration de vol dans laquelle ces poutres sont reliées les unes aux autres ;
[Fig. 10] est vue schématique d'une partie des demi-ensembles et de la poutre de liaison de la figure 8, en configuration de vol ;
[Fig. 11] est vue schématique d'une partie des demi-ensembles et de la poutre de liaison de la figure 8, en configuration de vol ;
[Fig. 12] est une vue schématique d'un verrou selon un premier mode de réalisation, prévu pour verrouiller les deux demi-ensembles de la figure 8, le verrou étant dans une position de verrouillage ;
[Fig. 13] est une vue schématique du verrou de la figure 12, le verrou étant dans une position de déverrouillage ;
[Fig. 14] est une vue schématique d'un verrou selon un deuxième mode de réalisation, prévu pour verrouiller les deux demi-ensembles de la figure 8, le verrou étant dans une position de verrouillage ;
[Fig. 15] est une vue schématique du verrou de la figure 14, le verrou étant dans une position de déverrouillage.

### Description détaillée de modes de réalisation

Les figures comprennent un référentiel relatif X1, X2 et X3 définissant respectivement des directions longitudinale (ou axiale), verticale et latérale orthogonales entre elles.

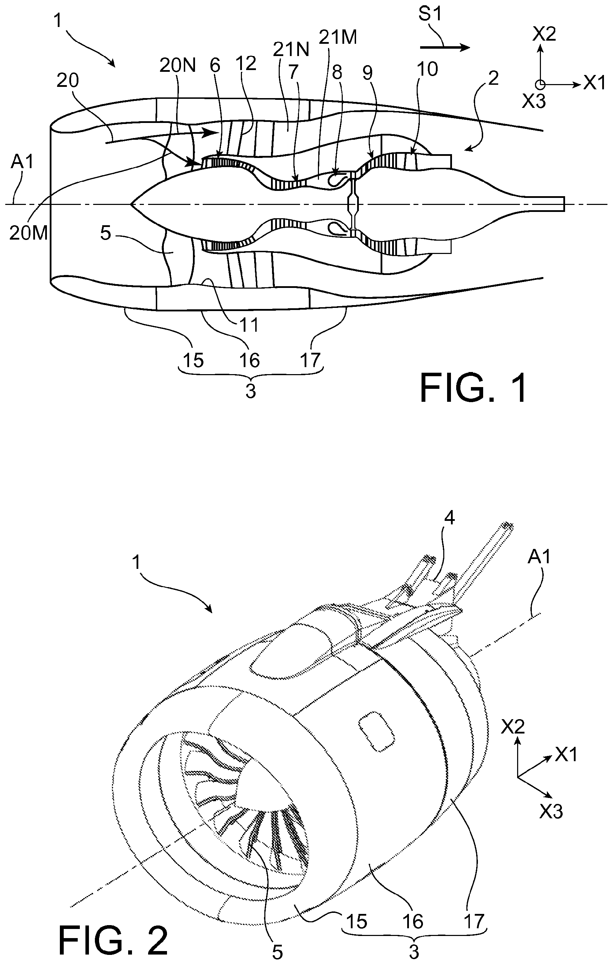

Les figures 1 et 2 montrent un ensemble propulsif 1 présentant un axe central longitudinal A1.

Par la suite, les termes « amont », « aval », « avant » et « arrière » sont définis relativement à un sens S1 d'écoulement des gaz à travers l'ensemble propulsif 1 le long de l'axe central longitudinal A1.

L'ensemble propulsif 1 comprend une turbomachine 2 (visible sur la figure 1), une nacelle 3 et un mât 4 (visible sur la figure 2) permettant de relier l'ensemble propulsif 1 à une voilure d'un aéronef (non représenté).

Dans l'exemple de la figure 1, la turbomachine 2 est un turboréacteur à double flux comprenant, de l'amont vers l'aval, une soufflante 5, un compresseur basse pression 6, un compresseur haute pression 7, une chambre de combustion 8, une turbine haute pression 9 et une turbine basse pression 10. Les compresseurs 6 et 7, la chambre de combustion 8 et les turbines 9 et 10 forment un générateur de gaz.

Le turboréacteur 2 comprend un carter de soufflante 11 relié au générateur de gaz par des bras structuraux 12.

La nacelle 3 comprend une section amont 15 formant une entrée d'air, une section médiane 16 qui comporte des capots de soufflante enveloppant le carter de soufflante 11 et une section aval 17 formant en aval de l'ensemble propulsif 1 une sortie d'évacuation des gaz générés par le turboréacteur 2.

De manière connue en soi, lors du fonctionnement du turboréacteur 2, un écoulement d'air 20 pénètre dans l'ensemble propulsif 1 par l'entrée d'air 15, traverse la soufflante 5 puis se divise en un flux primaire 20M central et un flux secondaire 20N. Le flux primaire 20M s'écoule dans un conduit primaire 21M de circulation des gaz au sein du générateur de gaz. Le flux secondaire 20N s'écoule quant à lui dans un conduit secondaire 21N entourant le générateur de gaz et délimité radialement vers l'extérieur par le carter de soufflante 11 et par la section aval 17 de la nacelle 3.

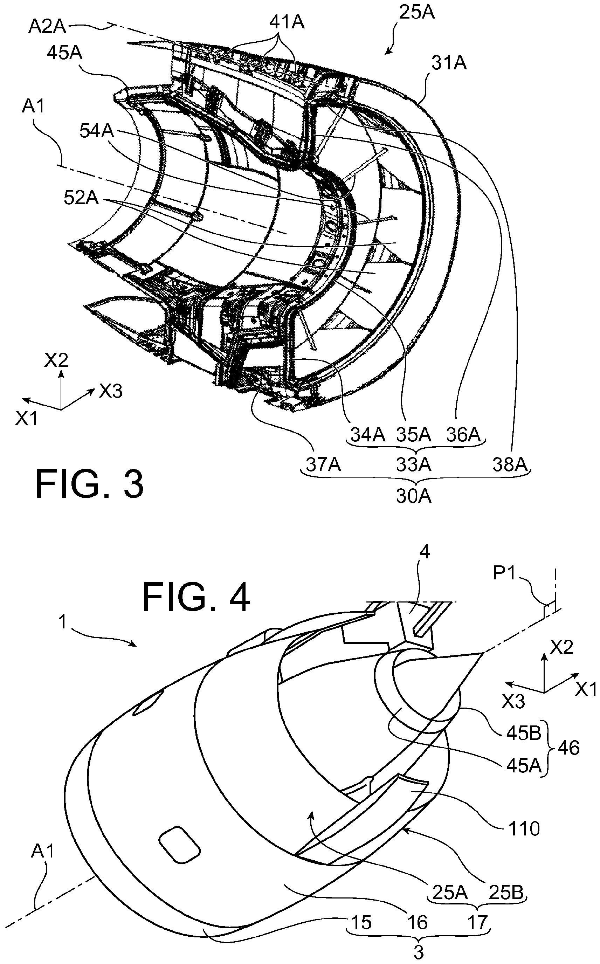

Les figures 3 et 4 montrent de manière plus détaillée la section aval 17 de la nacelle 3.

En référence à la figure 4, la section aval 17 comprend deux demi-ensembles 25A et 25B de forme hémicylindrique et symétriques l'un par rapport à l'autre relativement à un plan longitudinal médian P1 passant par l'axe central longitudinal A1 et parallèle à la direction verticale X2. Ainsi, les demi-ensembles 25A et 25B s'étendent latéralement de part et d'autre du plan P1 et en particulier de part et d'autre du mât 4.

Dans la description qui suit et sur certaines figures, il est utilisé des références permettant de distinguer des éléments situés d'un côté du plan P1 et des éléments symétriques situés de l'autre côté de ce plan. Cette distinction est réalisée par l'ajout dans ces références du suffixe « A » pour les éléments situés d'un côté du plan P1 et du suffixe « B » pour ceux situés de l'autre côté. De manière générale, tous les éléments symétriques ne sont pas représentés sur l'ensemble des figures. En outre, lorsqu'une partie de l'ensemble propulsif 1 présente deux demi-parties symétriques par rapport au plan P1, la description qui suit détaille dans la plupart des cas une seule de ces demi-parties. A défaut d'indication contraire, cette description s'applique par analogie à l'autre demi-partie correspondante.

En particulier, il est décrit ci-après en référence à la figure 3, le demi-ensemble 25A. La description suivante portant sur le demi-ensemble 25A s'applique donc par analogie au demi-ensemble 25B.

Le demi-ensemble 25A comprend deux parties qui sont mobiles l'une par rapport à l'autre. L'une de ces parties forme une structure 30A ici appelée « structure fixe » qui, en configuration de vol, reste dans une même position relativement au mât 4. L'autre partie du demi-ensemble 25A forme un capot 31A mobile par rapport à la structure fixe 30A (voir plus loin ci-dessous).

La structure fixe 30A comprend d'une part un carénage interne 33A délimitant radialement vers l'intérieur un secteur circonférentiel d'une portion longitudinale du conduit secondaire 21N.

Le carénage interne 33A, couramment dénommé « structure interne fixe », comporte, verticalement du bas vers le haut sur la figure 3, une paroi de jonction inférieure 34A aussi appelée « îlot » ou « bifurcation » « six-heures », une paroi centrale 35A de forme semi-annulaire et une paroi de jonction supérieure 36A aussi appelée « îlot » ou « bifurcation » « douze-heures ».

La structure fixe 30A comprend d'autre part une poutre inférieure 37A solidaire d'une extrémité radiale de la paroi de jonction inférieure 34A et une poutre supérieure 38A solidaire d'une extrémité radiale de la paroi de jonction supérieure 36A.

La poutre supérieure 38A comprend un premier élément de liaison 41A permettant de relier le demi-ensemble 25A à l'ensemble propulsif 1.

Dans cet exemple, le premier élément de liaison 41A comprend des oeillets configurés pour coopérer avec des arbres (non représentés) reliés à une poutre (non représentée) solidaire du mât 4 de manière à autoriser un déplacement du demi-ensemble 25A en rotation autour d'un axe de rotation A2A passant par un centre des oeillets 41A.

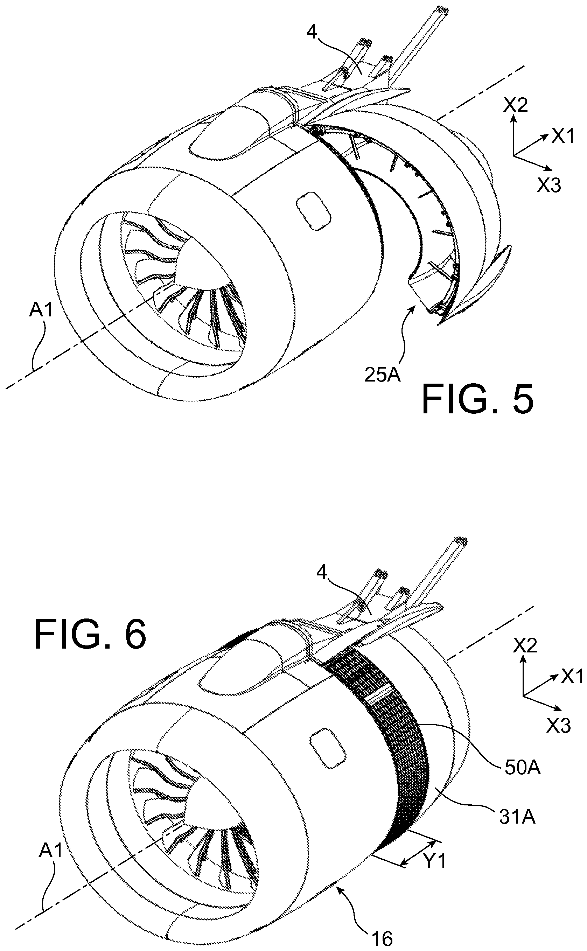

Le premier élément de liaison 41A permet ainsi de déplacer le demi-ensemble 25A entre ladite configuration de vol, illustrée à la figure 4, et une configuration de maintenance illustrée à la figure 5.

Dans cet exemple, l'axe de rotation A2A est sensiblement parallèle à l'axe central longitudinal A1. De manière générale, les axes A1 et A2A peuvent former un angle compris entre 0° et 3°

Concernant le capot mobile 31A, celui-ci s'étend radialement à l'extérieur de la paroi centrale 35A de la structure fixe 30A et présente lui aussi une forme semi-annulaire.

Ainsi, la paroi centrale 35A de la structure fixe 30A et le capot mobile 31A définissent radialement entre eux ledit secteur circonférentiel de portion longitudinale du conduit secondaire 21N, ce secteur s'étendant circonférentiellement autour de l'axe central longitudinal A1 entre la paroi de jonction inférieure 34A et la paroi de jonction supérieure 36A du carénage 33A.

Dans cet exemple, la structure fixe 30A comprend une paroi 45A reliée à la paroi centrale 35A et se prolongeant à l'arrière de celle-ci de manière à former une demi-partie d'une tuyère d'échappement 46 visible sur la figure 4.

De manière connue en soi, le capot mobile 31A est relié à la poutre inférieure 37A et à la poutre supérieure 38A de la structure fixe 30A selon une liaison glissière.

Dans cet exemple, cette liaison est réalisée par des glissières (non représentées) solidaires des poutres inférieure 37A et supérieure 38A et par de rails (non représentés) solidaires du capot mobile 31A qui coopèrent avec ces glissières.

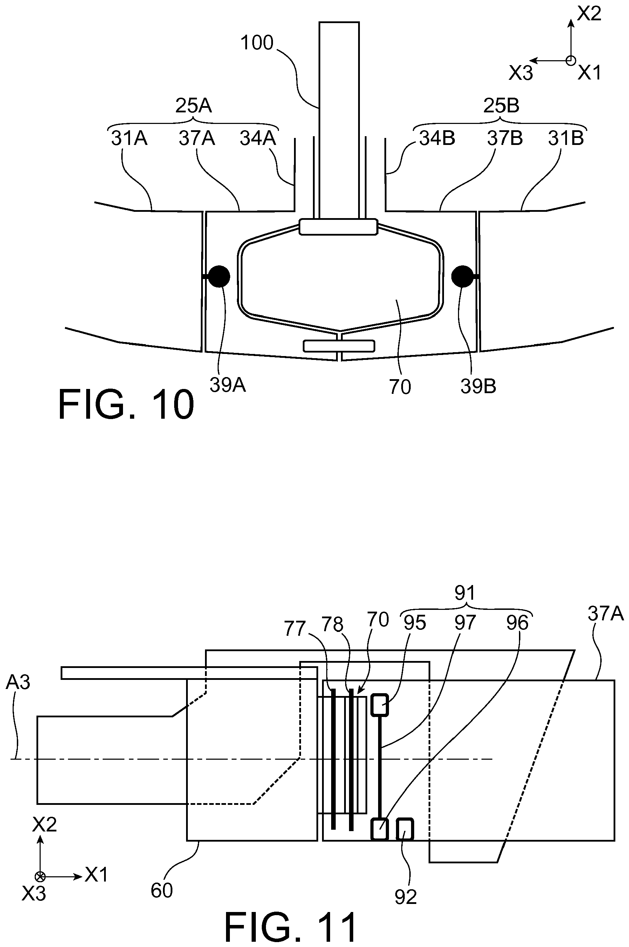

La figure 10 illustre schématiquement la liaison glissière 39A entre le capot mobile 31A et la poutre inférieure 37A.

Une telle liaison glissière permet au capot mobile 31A d'être déplacé, par exemple à l'aide de vérins (non représentés), par rapport à la structure fixe 30A en translation selon l'axe central longitudinal A1 entre une position avancée, illustrée aux figures 1, 2 et 4, et une position reculée, illustrée à la figure 6.

En position avancée, une extrémité avant du capot mobile 31A affleure une extrémité arrière du capot de soufflante situé du même côté du plan P1 que le capot mobile 31A, de manière à réduire la discontinuité entre ces capots et réduire ainsi les perturbations aérodynamiques à l'extérieur de la nacelle 3.

En position reculée, l'extrémité avant du capot mobile 31A et l'extrémité arrière du capot de soufflante correspondant de la section médiane 16 sont éloignées l'une de l'autre d'une distance Y1 définissant un espace formant une ouverture radiale (voir figure 6).

Dans cet exemple, la nacelle 3 comprend des grilles 50A et 50B s'étendant respectivement d'un côté et de l'autre du plan P1.

Les grilles 50A s'étendent à travers l'ouverture radiale précitée lorsque le capot mobile 31A est en position reculée.

En référence à la figure 3, le demi-ensemble 25A comprend par ailleurs des volets 52A et des bielles 54A.

De manière connue en soi, chacun des volets 52A est articulé sur le capot mobile 31A et chacune des bielles 54A est reliée d'une part à l'un respectif des volets 52A et d'autre part à la paroi centrale 35A du carénage 33A de la structure fixe 30A de sorte que, lorsque le capot mobile 31A passe de la position avancée à la position reculée, les volets 52A se déploient radialement dans le conduit secondaire 21N de manière à obturer ce conduit 21N.

La section aval 17 de la nacelle 3 forme ainsi un inverseur de poussée.

Lorsque le capot mobile 31A et 31B de chacun des demi-ensembles 25A et 25B est en position avancée, aussi appelée « position de poussée directe », le flux secondaire 20N est acheminé vers l'arrière de l'ensemble propulsif 1 en traversant la portion longitudinale du conduit secondaire 21N définie par la section aval 17. Dans cette configuration de poussée directe, les volets 52A du demi-ensemble 25A de même que les volets (non représentés) du demi-ensemble 25B sont rabattus contre la paroi interne du capot mobile 31A ou 31B correspondant. Le flux secondaire 20N contribue ainsi à générer une poussée.

Lorsque le capot mobile 31A et 31B de chacun des demi-ensembles 25A et 25B est en position reculée, aussi appelée « position d'inversion de poussée », les volets 52A du demi-ensemble 25A de même que les volets du demi-ensemble 25B obturent le conduit secondaire 21N de manière à rediriger le flux secondaire 20N vers ladite ouverture radiale. Le flux secondaire 20N traverse ainsi les grilles 50A et 50B en étant dévié par celles-ci vers l'avant de l'ensemble propulsif 1. Le flux secondaire 20N permet ainsi de générer une contre-poussée.

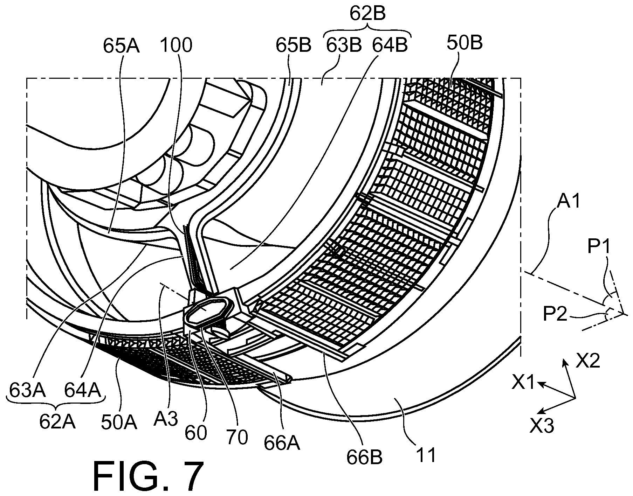

En référence à la figure 7, la nacelle 3 comprend une poutre de liaison 60 s'étendant le long d'un axe longitudinal A3.

Dans cet exemple, l'axe A3 est parallèle à l'axe central longitudinal A1 de l'ensemble propulsif 1 et passe par le plan longitudinal médian P1.

En référence à un plan longitudinal médian P2 perpendiculaire au plan P1 et passant par l'axe central longitudinal A1, la poutre de liaison 60 est située d'un côté du plan P2, en vis-à-vis du mât 4 qui est situé de l'autre côté de ce plan P2.

Autrement dit, la poutre de liaison 60 est située à six heures tandis que le mât 4 est situé à douze heures.

La poutre de liaison 60 est montée sur la section médiane 16 de manière à être solidaire du carter de soufflante 11.

La poutre de liaison 60 comprend une partie aval s'étendant en porte-à-faux relativement à une extrémité arrière du carter de soufflante 11.

Dans l'exemple de la figure 7, la section médiane 16 comprend, de part et d'autre du plan longitudinal médian P1, des carénages internes 62A et 62B présentant une forme semblable au carénage interne 33A décrit ci-dessus en référence à la figure 3.

Pour chacun des carénages internes 62A et 62B, la figure 7 montre une partie de ce carénage interne comprenant une paroi centrale 63A ou 63B.

Les carénages internes 62A et 62B sont reliés à la poutre de liaison 60 par les parois de jonction inférieures 64A et 64B, respectivement.

Bien entendu, chacun des carénages internes 62A et 62B comprend une paroi de jonction supérieure (non représentée) permettant de les relier à une partie fixe (non représentée) de l'ensemble propulsif 1.

Chacun des carénages internes 62A et 62B porte une rainure 65A ou 65B configurée pour recevoir une partie du carénage interne 33A ou 33B du demi-ensemble 25A ou 25B en configuration de vol. Les rainures 65A et 65B forment une interface permettant d'assurer une continuité aérodynamique d'une part entre les carénages internes 62A et 33A et d'autre part entre le carénage interne 62B et le carénage interne (non représenté) du demi-ensemble 25B.

Dans cet exemple, les grilles 50A et 50B sont mobiles en translation le long de l'axe central longitudinal A1.

A cet effet, elles sont chacune reliées selon une liaison glissière d'une part à douze heures à une partie fixe de l'ensemble propulsif et d'autre part à la poutre de liaison 60.

Dans le mode de réalisation de la figure 7, des glissières 66A et 66B sont fixées sur des parties latérales de la poutre de liaison 60 et les grilles 50A et 50B portent des rails (non visibles sur la figure 7) qui coopèrent avec les glissières 66A et 66B.

A la figure 7, les grilles 50A et 50B sont dans une position avancée.

Dans cet exemple, les grilles 50A et 50B sont solidaires respectivement du capot mobile 31A du demi-ensemble 25A et du capot mobile du demi-ensemble 25B, en translation le long de l'axe central longitudinal A1 de sorte que, lorsque ces capots mobiles sont en position de poussée directe, les grilles 50A et 50B soient en position avancée et lorsque les capots mobiles sont en position d'inversion de poussée les grilles 50A et 50B soient en position reculée.

Dans cet exemple, lorsque les demi-ensembles 25A et 25B sont en configuration de vol, les capots mobiles coopèrent avec les grilles 50A et 50B par l'intermédiaire d'une liaison tenon-rainure similaire à la liaison entre l'organe de liaison 70 et ledit deuxième élément de liaison des demi-ensembles 25A et 25B.

En position avancée, les grilles 50A et 50B sont au moins partiellement logées dans un espace s'étendant radialement entre le carter de soufflante 11 et un capot de soufflante respectif de la section médiane 16.

En position reculée, les grilles 50A et 50B s'étendent dans l'ouverture radiale s'étendant longitudinalement entre les capots mobiles des demi-ensembles 25A et 25B et les capots de soufflante de la section médiane 16 (voir ci-dessus et figure 6).

L'invention se rapporte plus spécifiquement à la coopération des demi-ensembles 25A et 25B avec la poutre de liaison 60.

La partie de la poutre de liaison 60 visible sur la figure 7 présente une extrémité formant un organe de liaison 70 qui coopère avec un deuxième élément de liaison des demi-ensembles 25A et 25B lorsque ceux-ci sont en configuration de vol.

Géométriquement, l'organe de liaison 70 s'étend :
- entre deux plans transversaux perpendiculaires à l'axe central longitudinal A1,
- entre deux plans longitudinaux parallèles au plan longitudinal médian P1 et s'étendant de part et d'autre de l'axe longitudinal A3,
- entre deux plans longitudinaux parallèles au plan longitudinal médian P2 et s'étendant de part et d'autre de l'axe longitudinal A3.

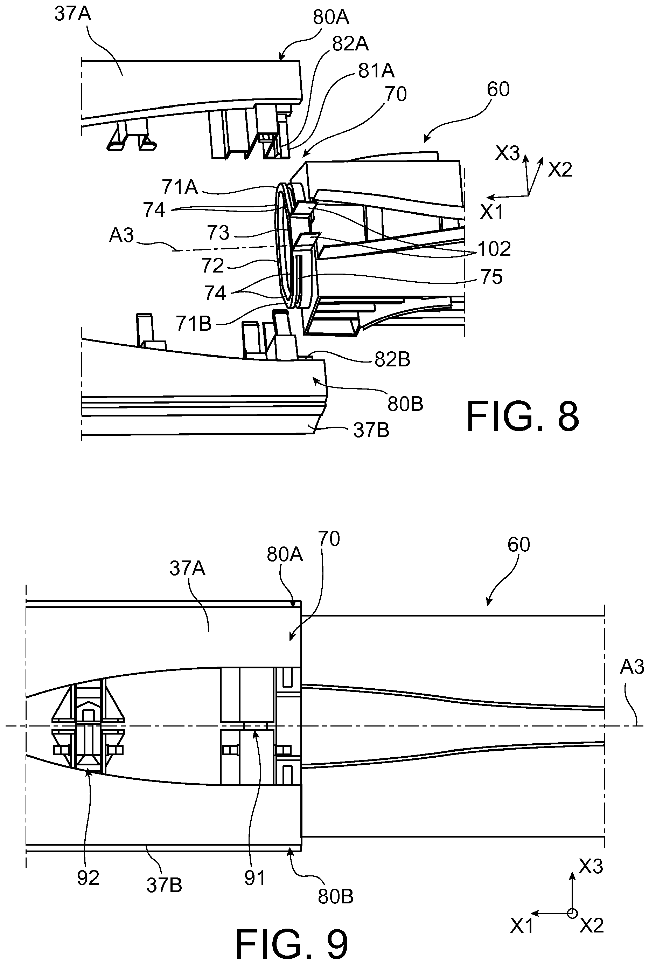

En référence à la figure 8, l'organe de liaison 70 présente deux sommets latéraux 71A et 71B, une base inférieure 72 et une base supérieure 73 configurés de manière à admettre un plan longitudinal parallèle au plan P2 qui passe à la fois par l'axe longitudinal A3 et par les deux sommets latéraux 71A et 71B, et de sorte que le plan P1 traverse la base inférieure 72 et par la base supérieure 73.

L'organe de liaison 70 comprend quatre branches 74 reliant respectivement la base supérieure 73 et le sommet latéral 71A l'un à l'autre, le sommet latéral 71A et la base inférieure 72 l'un à l'autre, la base inférieure 72 et le sommet latéral 71B l'un à l'autre, et le sommet latéral 71B et la base supérieure 73 l'un à l'autre.

Les branches 74 sont obliques par rapport aux plans longitudinaux médians P1 et P2.

L'organe de liaison 70 est symétrique par rapport au plan P1.

De part et d'autre du plan de symétrie P1, l'organe de liaison 70 présente dans une section transversale une forme de C, la base inférieure 72 et la base supérieure 73 formant les extrémités libres du C.

L'organe de liaison 70 comprend une rainure 75 s'étendant circonférentiellement autour de l'axe A3.

Dans cet exemple, la rainure 75 est réalisée sur les quatre branches 74, sur les sommets latéraux 71A et 71B et sur la base inférieure 72 et forme une rainure unique continue.

La figure 8 montre les poutres inférieures 37A et 37B des demi-ensembles 25A et 25B respectivement, ainsi que la poutre de liaison 60 en vue éclatée.

La poutre 37A de la figure 8 comprend une extrémité formant ledit deuxième élément de liaison 80A du demi-ensemble 25A.

Le deuxième élément de liaison 80A comprend une paroi 81A présentant une forme complémentaire à la demi-partie de l'organe de liaison 70 s'étendant du même côté du plan P1 que le demi-ensemble 25A. La paroi 81A a donc elle aussi une forme de C.

La paroi 81A forme une demi-cavité configurée pour envelopper cette demi-partie de l'organe de liaison 70 lorsque le demi-ensemble 25A est en configuration de vol, tel qu'illustré aux figures 9 et 10.

Le deuxième élément de liaison 80A comprend un tenon 82A s'étendant dans cet exemple sur la paroi 81A, au sein de la demi-cavité formée par cette paroi 81A.

Le tenon 82A est configuré pour pénétrer dans la rainure 75, plus précisément dans la demi-partie de la rainure 75 s'étendant du même côté du plan P1 que le demi-ensemble 25A, lorsque le demi-ensemble 25A est déplacé de la configuration de maintenance jusqu'à la configuration de vol de manière à positionner la structure fixe 30A du demi-ensemble 25A par rapport à l'organe de liaison 70 et donc par rapport à la poutre de liaison 60.

Dans cet exemple, la rainure 75 a une forme trapézoïdale. Elle présente plus spécifiquement une surface de fond et des surfaces latérales obliques par rapport à la surface de fond de sorte que la largeur de la rainure 75 soit plus grande au niveau de la surface externe de l'organe de liaison 70 sur laquelle elle débouche qu'au niveau de la surface de fond.

Le tenon 82A a une forme complémentaire et présente une section en forme de trapèze.

Une telle géométrie du tenon 82A et de la rainure 75 permet d'augmenter la précision du positionnement à mesure que le demi-ensemble 25A s'approche de la configuration de vol tout en facilitant la pénétration du tenon 82A dans la rainure 75 compte tenu notamment des jeux dans le mécanisme.

La description qui précède relative à la coopération du deuxième élément de liaison 80A du demi-ensemble 25A s'applique par analogie à l'élément de liaison 80B du demi-ensemble 25B.

Il résulte de ce qui précède que, lorsque les demi-ensembles 25A et 25B sont en configuration de maintenance, ceux-ci sont désolidarisés de l'organe de liaison 70 et que, lorsque les demi-ensembles 25A et 25B sont en configuration de vol, ceux-ci sont reliés l'un à l'autre par l'intermédiaire de l'organe de liaison 70 avec lequel ils coopèrent de manière à être correctement positionnés relativement à la poutre 60.

Le verrouillage des demi-ensembles 25A et 25B en configuration de vol est dans cet exemple assuré par deux verrous 91 et 92.

En référence aux figures 9 et 11, les verrous 91 et 92 sont montés l'un derrière l'autre en aval des deuxièmes éléments de liaison 80A et 80B, à proximité de l'organe de liaison 70.

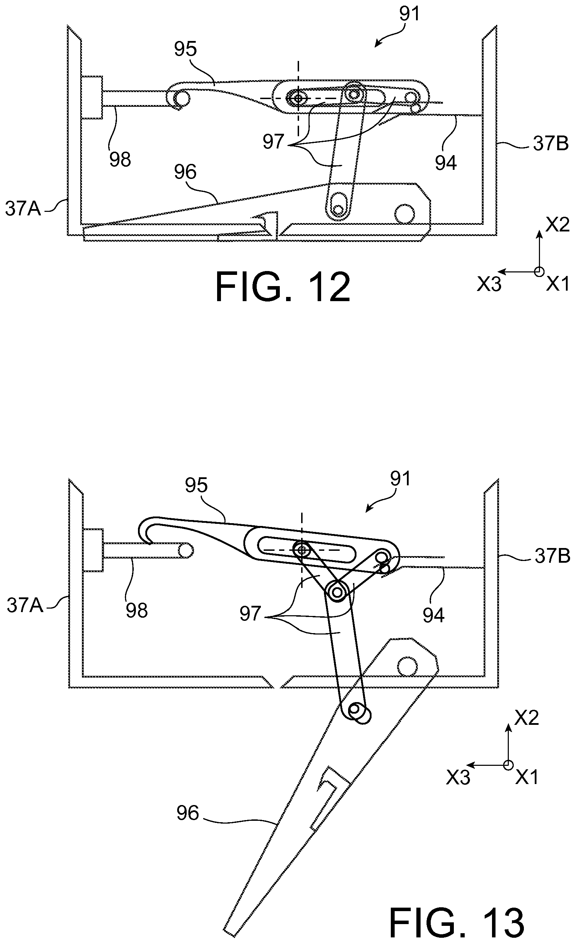

Les figures 12 et 13 montrent le verrou 91 respectivement dans une position de verrouillage et dans une position de déverrouillage.

Dans cet exemple, le verrou 91 comprend un crochet 95, une poignée d'actionnement 96 et des biellettes 97 reliant le crochet 95 et la poignée 96 l'un à l'autre.

Le verrou 91 est configuré de sorte que la poignée 96 soit affleurante avec une surface externe des poutres inférieures 37A et 37B des demi-ensembles 25A et 25B lorsque ceux-ci sont en configuration de vol et que le verrou 91 est en position de verrouillage. Cela permet d'actionner manuellement la poignée 96 tout en évitant que celle-ci soit en saillie par rapport à la surface externe des poutres inférieures 37A et 37B.

Dans cet exemple, le verrou 91 est monté sur la poutre inférieure 37B du demi-ensemble 25B. Lorsque le verrou 91 est en position de verrouillage, le crochet 95 coopère avec un élément d'accroche 98 solidaire de la poutre inférieure 37A du demi-ensemble 25A de manière à exercer sur la poutre inférieure 37A un effort de traction tendant à la rapprocher de la poutre inférieure 37B selon la direction latérale X3.

Le déplacement du verrou 91 entre les positions de verrouillage et de déverrouillage est assuré par les biellettes 97 et par un élément de guidage 94 tel qu'une came solidaire de la poutre inférieure 37B.

Le verrou 91 est appelé « verrou interne » car le crochet 95 est déporté radialement vers l'intérieur par rapport à la poignée 96.

En effet, le crochet 95 et l'élément d'accroche 98 s'étendent radialement entre l'axe central longitudinal A1 de l'ensemble propulsif 1 et l'axe longitudinal A3 de la poutre 60 (voir figure 11).

Autrement dit, en position de verrouillage, la partie active du verrou interne 91 s'étend radialement à l'intérieur par rapport à l'axe longitudinal A3, tandis que la partie d'actionnement du verrou interne 91 s'étend radialement à l'extérieur par rapport à l'axe longitudinal A3.

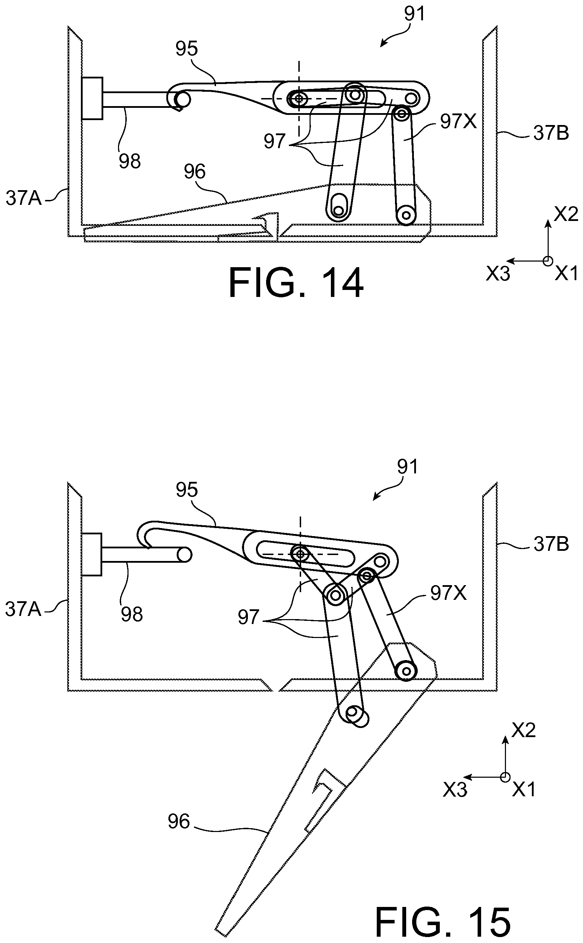

Les figures 14 et 15 illustrent un autre mode de réalisation dans lequel le verrou interne 91 se distingue de celui des figures 12 et 13 en ce qu'il comprend une biellette 97X supplémentaire permettant de s'affranchir de l'élément de guidage 94.

Le verrou 92, non représenté en détails, est un verrou conventionnel qui fonctionne selon le même principe général que le verrou interne 91.

Toutefois, la partie active du verrou 92 n'est pas radialement déportée à l'intérieur par rapport à l'axe longitudinal A3.

Par opposition avec le verrou interne 91, le verrou 92 forme par conséquent un « verrou externe » au sens où il s'étend et agit sur une partie des poutres 37A et 37B située radialement à l'extérieur par rapport à l'axe longitudinal A3.

Le positionnement et/ou le maintien en position des poutres 37A et 37B par rapport à l'organe de liaison 70 et/ou l'étanchéité peuvent être améliorés en interposant un ou plusieurs joints entre ces différents éléments.

Dans l'exemple de la figure 11, un premier joint 77 est logé dans une rainure (non représentée) réalisée dans la poutre de liaison 60, en amont de la rainure 75 et un deuxième joint 78 est logé dans la rainure 75. La nacelle peut comprendre un système d'étanchéité formé par une série de joints incluant par exemple les joints 77 et 78 et/ou d'autres joints.

En référence aux figures 7, 8 et 10, la poutre de liaison 60 ménage un espace interne creux formant un passage pour des servitudes 100 du turboréacteur 2.

Une partie de cet espace interne est délimité par deux cloisons 102 s'étendant au droit de la base supérieure 73 de l'organe de liaison 70 (voir figure 8).

Dans l'exemple de la figure 4, la nacelle 3 comprend un caisson 110 abritant la poutre de liaison 60 et les poutres inférieures 37A et 37B des demi-ensembles 25A et 25B.

Bien entendu, la description qui précède n'est pas limitative. Par exemple, la rainure 75 peut être discontinue et/ou présenter une géométrie rectangulaire ou de toute autre forme. Pour autre exemple, le deuxième élément de liaison 80A et/ou 80B peut comprendre à la place ou en complément du tenon 82A ou 82B une ou plusieurs rainures (non représentées) coopérant avec un ou plusieurs tenons (non représentés) solidaires de l'organe de liaison 70.

## Revendications

1. Inverseur de poussée (17) pour ensemble propulsif (1) d'aéronef, comprenant deux demi-ensembles (25A, 25B), une poutre de liaison (60) et des grilles (50A, 50B), chacun des demi-ensembles (25A, 25B) comprenant un capot mobile (31A, 31B) et une structure fixe (30A, 30B) comportant un premier élément de liaison (41A) et un deuxième élément de liaison (80A, 80B), la poutre de liaison (60) comprenant un organe de liaison (70), pour chacun des demi-ensembles (25A, 25B) :
- le premier élément de liaison (41A) étant configuré pour articuler le demi-ensemble (25A) sur une partie fixe de l'ensemble propulsif (1) de manière à pouvoir déplacer le demi-ensemble (25A) entre une configuration de vol dans laquelle le deuxième élément de liaison (80A) coopère avec l'organe de liaison (70) et une configuration de maintenance dans laquelle le deuxième élément de liaison (80A) est désolidarisé de l'organe de liaison (70),
- en configuration de vol, le capot mobile (31A) étant mobile par rapport à la structure fixe (30A) en translation le long d'un axe central longitudinal (A1) entre une position de poussée directe, dans laquelle la structure fixe (30A) et le capot mobile (31A) délimitent radialement entre eux une partie respective d'un conduit (21N) afin de canaliser un écoulement de fluide (20N) vers l'arrière de l'ensemble propulsif (1) pour générer une poussée, et une position d'inversion de poussée, dans laquelle le capot mobile (31A) découvre un espace recevant les grilles (50A) de sorte qu'une partie du fluide (20N) s'écoulant dans le conduit (21N) puisse traverser les grilles (50A) en étant déviée par celles-ci de manière à générer une contre-poussée,
**caractérisé en ce que**, parmi l'organe de liaison (70) et le deuxième élément de liaison (80A, 80B) de chacun des demi-ensembles (25A, 25B), l'un comprend une rainure (75) et l'autre comprend un tenon (82A, 82B) configuré pour pénétrer dans la rainure (75) lorsque les demi-ensembles (25A, 25B) sont déplacés de la configuration de maintenance jusqu'à la configuration de vol de manière à positionner chacun des demi-ensembles (25A, 25B) en configuration de vol, l'inverseur de poussée (17) comprenant un ou plusieurs verrous (91, 92) configurés pour relier l'un à l'autre et pour verrouiller les demi-ensembles (25A, 25B) en configuration de vol.

2. Inverseur de poussée (17) selon la revendication 1, dans lequel le deuxième élément de liaison (80A, 80B) de chacun des demi-ensembles (25A, 25B) forme une demi-cavité enveloppant une demi-partie respective de l'organe de liaison (70) lorsque les demi-ensembles (25A, 25B) sont en configuration de vol.

3. Inverseur de poussée (17) selon la revendication 1 ou 2, dans lequel la poutre de liaison (60) s'étend le long d'un axe (A3) autour duquel s'étend la rainure (75).

4. Inverseur de poussée (17) selon l'une quelconque des revendications 1 à 3, dans lequel l'un desdits verrous est un verrou interne (91) et un autre desdits verrous est un verrou externe (92) :
- le verrou interne (91) étant relié à la structure fixe (30B) de l'un des demi-ensembles (25B) et étant configuré pour coopérer avec un premier élément d'accroche (98) solidaire de la structure fixe (30A) de l'autre demi-ensemble (25A), l'élément d'accroche (98) s'étendant radialement entre l'axe central longitudinal (A1) et un axe (A3) le long duquel s'étend de la poutre de liaison (60),
- le verrou externe (92) étant relié à la structure fixe (30B) de l'un des demi-ensembles (25B) et étant configuré pour coopérer avec un deuxième élément d'accroche solidaire de la structure fixe (30A) de l'autre demi-ensemble (25A), l'axe (A3) le long duquel s'étend la poutre de liaison (60) s'étendant radialement entre le deuxième élément d'accroche et l'axe central longitudinal (A1).

5. Inverseur de poussée (17) selon l'une quelconque des revendications 1 à 4, dans lequel le premier élément de liaison (41A) de chacun des demi-ensembles (25A, 25B) est situé d'un côté d'un plan longitudinal médian (P2) passant par l'axe central longitudinal (A1) et dans lequel la poutre de liaison (60) est située de l'autre côté de ce plan longitudinal médian (P2).

6. Nacelle (3) pour ensemble propulsif (1) d'aéronef, comprenant un inverseur de poussée (17) selon l'une quelconque des revendications 1 à 5.

7. Ensemble propulsif (1) pour aéronef, comprenant une nacelle (3) selon la revendication 6.

8. Ensemble propulsif (1) selon la revendication 7, comprenant un carter de soufflante (11), la poutre de liaison (60) s'étendant axialement en porte-à-faux par rapport au carter de soufflante (11).

9. Aéronef comprenant un ensemble propulsif (1) selon la revendication 7 ou 8.

## Patentansprüche

1. Schubumkehrvorrichtung (17) für eine Antriebseinheit (1) eines Luftfahrzeugs, die zwei Halbeinheiten (25A, 25B), einen Verbindungsträger (60) und Gitter (50A, 50B) umfasst, wobei jede der Halbeinheiten (25A, 25B) eine bewegliche Haube (31A, 31B) und eine feste Struktur (30A, 30B) umfasst, die ein erstes Verbindungselement (41A) und ein zweites Verbindungselement (80A, 80B) umfasst, wobei der Verbindungsträger (60) ein Verbindungsorgan (70) umfasst, wobei, bei jeder der Halbeinheiten (25A, 25B):
- das erste Verbindungselement (41A) so konfiguriert ist, dass es die Halbeinheit (25A) an einem festen Teil der Antriebseinheit (1) so anlenkt, dass die Halbeinheit (25A) zwischen einer Flugkonfiguration, in der das zweite Verbindungselement (80A) mit dem Verbindungsorgan (70) zusammenwirkt, und einer Wartungskonfiguration, in der das zweite Verbindungselement (80A) vom Verbindungsorgan (70) gelöst ist, verlagert werden kann,
- in der Flugkonfiguration die bewegliche Haube (31A) in Bezug auf die feste Struktur (30A) entlang einer Längsmittelachse (A1) zwischen einer Direktschubposition, in der die feste Struktur (30A) und die bewegliche Haube (31A) radial zwischen sich einen jeweiligen Teil einer Leitung (21N) begrenzen, um einen Fluidstrom (20N) zum Heck der Antriebseinheit (1) hin zu kanalisieren, um einen Schub zu erzeugen, und einer Schubumkehrposition verschiebebeweglich ist, in der die bewegliche Haube (31A) einen Raum, der die Gitter (50A) aufnimmt, freigibt, sodass ein Teil des in der Leitung (21N) strömenden Fluids (20N) durch die Gitter (50A) hindurchtreten kann und dabei von diesen abgelenkt wird, um einen Gegenschub zu erzeugen,
**dadurch gekennzeichnet, dass** von dem Verbindungsorgan (70) und dem zweiten Verbindungselement (80A, 80B) jeder der Halbeinheiten (25A, 25B) eines eine Nut (75) umfasst und das andere einen Zapfen (82A, 82B) umfasst, der so konfiguriert ist, dass er in die Nut (75) eindringt, wenn die Halbeinheiten (25A, 25B) aus der Wartungskonfiguration in die Flugkonfiguration verlagert werden, um jede der Halbeinheiten (25A, 25B) in der Flugkonfiguration zu positionieren, wobei die Schubumkehrvorrichtung (17) eine oder mehrere Verriegelungen (91, 92) umfasst, die so konfiguriert sind, dass sie die Halbeinheiten (25A, 25B) in der Flugkonfiguration miteinander verbinden und verriegeln.

2. Schubumkehrvorrichtung (17) nach Anspruch 1, wobei das zweite Verbindungselement (80A, 80B) jeder der Halbeinheiten (25A, 25B) einen Halbhohlraum bildet, der einen jeweiligen halben Teil des Verbindungsorgans (70) umhüllt, wenn sich die Halbeinheiten (25A, 25B) in der Flugkonfiguration befinden.

3. Schubumkehrvorrichtung (17) nach Anspruch 1 oder 2, wobei sich der Verbindungsträger (60) entlang einer Achse (A3) erstreckt, um die sich die Nut (75) erstreckt.

4. Schubumkehrvorrichtung (17) nach einem der Ansprüche 1 bis 3, wobei eine der Verriegelungen eine innere Verriegelung (91) ist und eine andere der Verriegelungen eine äußere Verriegelung (92) ist:
- wobei die innere Verriegelung (91) mit der festen Struktur (30B) einer der Halbeinheiten (25B) verbunden ist und so konfiguriert ist, dass sie mit einem ersten Einhängeelement (98) zusammenwirkt, das fest mit der festen Struktur (30A) der anderen Halbeinheit (25A) verbunden ist, wobei sich das Einhängeelement (98) radial zwischen der Längsmittelachse (A1) und einer Achse (A3) erstreckt, entlang der sich der Verbindungsträger (60) erstreckt,
- wobei die äußere Verriegelung (92) mit der festen Struktur (30B) einer der Halbeinheiten (25B) verbunden ist und so konfiguriert ist, dass sie mit einem zweiten Einhängeelement zusammenwirkt, das fest mit der festen Struktur (30A) der anderen Halbeinheit (25A) verbunden ist, wobei sich die Achse (A3), entlang der sich der Verbindungsträger (60) erstreckt, radial zwischen dem zweiten Einhängeelement und der Längsmittelachse (A1) erstreckt.

5. Schubumkehrvorrichtung (17) nach einem der Ansprüche 1 bis 4, wobei das erste Verbindungselement (41A) jeder der Halbeinheiten (25A, 25B) auf einer Seite einer durch die Längsmittelachse (A1) verlaufenden Längsmittelebene (P2) liegt und wobei der Verbindungsträger (60) auf der anderen Seite dieser Längsmittelebene (P2) liegt.

6. Gondel (3) für eine Antriebseinheit (1) eines Luftfahrzeugs, die eine Schubumkehrvorrichtung (17) nach einem der Ansprüche 1 bis 5 umfasst.

7. Antriebseinheit (1) für ein Luftfahrzeug, die eine Gondel (3) nach Anspruch 6 umfasst.

8. Antriebseinheit (1) nach Anspruch 7, die ein Gebläsegehäuse (11) umfasst, wobei sich der Verbindungsträger (60) axial freitragend in Bezug auf das Gebläsegehäuse (11) erstreckt.

9. Luftfahrzeug, das eine Antriebseinheit (1) nach Anspruch 7 oder 8 umfasst.

## Claims

1. A thrust reverser (17) for an aircraft propulsion unit (1), comprising two half-assemblies (25A, 25B), a connecting beam (60) and cascades (50A, 50B), each of the half-assemblies (25A, 25B) comprising a movable cowl (31A, 31B) and a fixed structure (30A, 30B) including a first connecting element (41A) and a second connecting element (80A, 80B), the connecting beam (60) comprising a connecting member (70), for each of the half-assemblies (25A, 25B):
- the first connecting element (41A) being configured to articulate the half-assembly (25A) on a fixed portion of the propulsion unit (1) so as to be able to move the half-assembly (25A) between a flight configuration in which the second connecting element (80A) cooperates with the connecting member (70) and a maintenance configuration in which the second connecting element (80A) is detached off the connecting member (70),
- in the flight configuration, the movable cowl (31A) being movable relative to the fixed structure (30A) in translation along a longitudinal central axis (A1) between a direct thrust position, in which the fixed structure (30A) and the movable cowl (31A) delimit radially therebetween a respective portion of a duct (21N) in order to channel a fluid flow (20N) towards the rear of the propulsion unit (1) to generate thrust, and a thrust reversal position, in which the movable cowl (31A) uncovers a space receiving the cascades (50A) so that a portion of the fluid (20N) flowing in the duct (21N) could pass through the cascades (50A) while being diverted thereby so as to generate counter-thrust,
**characterised in that**, amongst the connecting member (70) and the second connecting element (80A, 80B) of each of the half-assemblies (25A, 25B), one comprises a groove (75) and the other one comprises a tenon (82A, 82B) configured to fit into the groove (75) when the half-assemblies (25A, 25B) are moved from the maintenance configuration up to the flight configuration so as to position each of the half-assemblies (25A, 25B) in the flight configuration, the thrust reverser (17) comprising one or more lock(s) (91, 92) configured to connect together and to lock the half-assemblies (25A, 25B) in the flight configuration.

2. The thrust reverser (17) according to claim 1, wherein the second connecting element (80A, 80B) of each of the half-assemblies (25A, 25B) forms a half-cavity enveloping a respective half-portion of the connecting member (70) when the half-assemblies (25A, 25B) are in the flight configuration.

3. The thrust reverser (17) according to claim 1 or 2, wherein the connecting beam (60) extends along an axis (A3) around which the groove (75) extends.

4. The thrust reverser (17) according to any one of claims 1 to 3, wherein one of said locks is an inner lock (91) and another one of said locks is an outer lock (92):
- the inner lock (91) being connected to the fixed structure (30B) of one of the half-assemblies (25B) and being configured to cooperate with a first hooking element (98) secured to the fixed structure (30A) of the other half-assembly (25A), the hooking element (98) extending radially between the longitudinal central axis (A1) and an axis (A3) along which the connecting beam extends (60),
- the outer lock (92) being connected to the fixed structure (30B) of one of the half-assemblies (25B) and being configured to cooperate with a second hooking element secured to the fixed structure (30A) of the other half-assembly (25A), the axis (A3) along which the connecting beam (60) extends extending radially between the second hooking element and the longitudinal central axis (A1).

5. The thrust reverser (17) according to any one of claims 1 to 4, wherein the first connecting element (41A) of each of the half-assemblies (25A, 25B) is located on one side of a longitudinal midplane (P2) passing through the longitudinal central axis (A1) and wherein the connecting beam (60) is located on the other side of this longitudinal midplane (P2).

6. A nacelle (3) for an aircraft propulsion unit (1), comprising a thrust reverser (17) according to any one of claims 1 to 5.

7. A propulsion unit (1) for an aircraft, comprising a nacelle (3) according to claim 6.

8. The propulsion unit (1) according to claim 7, comprising a fan casing (11), the connecting beam (60) extending axially cantilevered with respect to the fan casing (11).

9. An aircraft comprising a propulsion unit (1) according to claim 7 or 8.
